# EUROPEAN PATENT APPLICATION

(11) **EP 4 583 131 A1**
(43) Date of publication of application: **09.07.2025**
(21) Application number: 22961074.6
(22) Date of filing: 28.09.2022
(51) Int. Cl.: H01F 27/32, H01F 27/30, H01F 27/28, H02M 3/00, H02M 3/335

(54) **TRANSFORMER AND LLC RESONANT CONVERTER COMPRISING SAME**

(71) Applicant: LG Electronics Inc., Yeongdeungpo-gu Seoul 07336 (KR)
(72) Inventor: JANG, Jinhaeng, Seoul 06772 (KR); BAEK, Seunghun, Seoul 06772 (KR); KIM, Dohoon, Seoul 06772 (KR)
(74) Representative: Vossius & Partner Patentanwälte Rechtsanwälte mbB
(86) International application number: PCT/KR2022/014600
(87) International publication number: WO 2024/071471

(57) **Abstract**

A transformer according to one embodiment of the present disclosure may comprise: a bobbin; a primary coil wound around the bobbin; a secondary coil wound around the bobbin; a core having an upper core member and a lower core member that are coupled in the vicinity of the primary coil and the secondary coil, wherein the bobbin can comprise a first bobbin member and a second bobbin member, which guide winding areas of the primary coil and the secondary coil on the outside of the core.

## Description

### [Technical Field]

The present disclosure relates to a transformer and an LLC resonant converter including the same.

### [Background Art]

The use of LLC resonant converters capable of ZVS (Zero Voltage Switching) operation in power supply devices is increasing to implement high efficiency and high power density.

Conventional LLC resonant converters mainly used an operating frequency of 80 to 120 kHz considering the characteristics of control operation ICs and switching devices.

However, as the resolution of TVs has recently developed to 4K/8K, the operating frequency has increased, and the power supply devices of these TVs have increased in power capacity, which has the problem of increasing the size when designed in the same way as before.

### [Disclosure]

### [Technical Problem]

The present disclosure proposes a method for miniaturizing a transformer that occupies a large volume in an LLC resonant converter.

### [Technical Solution]

An LLC resonant converter according to an embodiment of the present disclosure includes a resonant circuit comprising a square wave generator, a resonant capacitor, a resonant inductance, and a transformer, and a rectifier circuit, wherein the transformer includes a bobbin, a primary coil wound around the bobbin, a secondary coil wound around the bobbin, and a core including an upper core member and a lower core member coupled around the primary coil and the secondary coil, and the bobbin may include a first bobbin member and a second bobbin member guiding winding areas of the primary coil and the secondary coil outside the core.

A transformer according to an embodiment of the present disclosure includes a bobbin, a primary coil wound around the bobbin, a secondary coil wound around the bobbin, and a core including an upper core member and a lower core member coupled around the primary coil and the secondary coil, and the bobbin may include a first bobbin member and a second bobbin member guiding winding areas of the primary coil and the secondary coil outside the core.

The upper core member and the lower core member can be assembled between the first bobbin member and the second bobbin member.

The first bobbin member and the second bobbin member can guide the primary coil and the secondary coil, which are arranged between the upper core member and the lower core member, to be arranged flatly.

The primary coil and the secondary coil can be arranged with a predetermined distance or more apart from each other.

The secondary coil can include a flat winding portion arranged flatly, and a connecting portion extended from the flat winding portion and dipped into the power board.

The connecting portion includes at least a first connecting portion and a second connecting portion, and the length of the first connecting portion and the length of the second connecting portion can be different.

One of the first connecting portion and the second connecting portion can be connected closer to the rectifier circuit than the other connecting portion.

The transformer can further include a heat dissipation portion arranged between the other connecting portion and the rectifier circuit.

Only the primary coil and the secondary coil can be placed between the upper core member and the lower core member.

### [Advantageous Effects]

According to an embodiment of the present disclosure, the bobbin is composed of a first bobbin member and a second bobbin member that guide the winding areas of the primary coil and the secondary coil outside the core, thereby improving the heat generation problem by increasing the winding window area within the core, and increasing the thickness of the core, thereby increasing the power capacity without increasing the actual volume of the core.

According to an embodiment of the present disclosure, there is an advantage in that stable leakage inductance can be generated by separating the primary coil and the secondary coil and arranging them flatly.

According to an embodiment of the present disclosure, there is an advantage in that the connecting portion connected to the power board from the secondary coil is arranged close to the rectifier circuit, thereby minimizing the leakage inductance component due to the PCB pattern, thereby improving the operational stability.

According to an embodiment of the present disclosure, there is an advantage in that the length of the connecting portion connected to the power board from the secondary coil is formed differently, thereby enabling the addition of components such as the heat dissipation portion.

### [Description of Drawings]

FIG. 1 is a circuit diagram illustrating an example of a power supply device including an LLC resonant converter.
FIG. 2 is a cross-sectional view of a conventional transformer.
FIG. 3 is a plan view illustrating a bobbin of a conventional transformer.
FIG. 4 is a cross-sectional view of a transformer according to an embodiment of the present disclosure.
FIG. 5 is a diagram illustrating a bobbin of a transformer according to an embodiment of the present disclosure.
FIG. 6 is a diagram illustrating a primary coil and a secondary coil wound around the bobbin illustrated in FIG. 5.
FIG. 7 is an exemplary diagram illustrating a secondary coil of a transformer according to a first embodiment of the present disclosure connected to a power board.
FIG. 8 is an exemplary diagram illustrating a secondary coil of a transformer according to a second embodiment of the present disclosure connected to a power board.

### [Best Model

Hereinafter, a preferred embodiment according to the present disclosure will be described in detail with reference to the attached drawings. In the drawings, the same reference numerals are used to indicate the same or similar components.

The suffixes "module" and "portion" used for components in the following description are given or used interchangeably only for the convenience of writing the specification, and do not have distinct meanings or roles in themselves.

In the following description, "connection" between components includes not only direct connection of components, but also indirect connection through at least one other component, unless otherwise specified.

Various electronic devices such as TVs include power supply devices, and these power supply devices can use LLC topology. That is, an LLC resonant converter can be used in the power supply device.

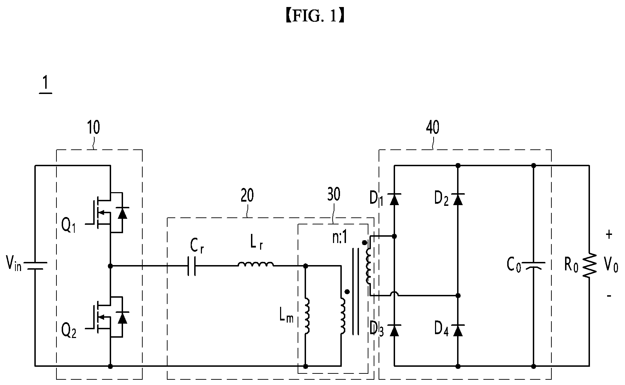

Fig. 1 is a circuit diagram illustrating an example of a power supply device including an LLC resonant converter.

Referring to Fig. 1, an LLC resonant converter 1 can include a square wave generator 10, a resonant circuit 20, and a rectifier circuit 40.

The square wave generator 10 includes a plurality of switching elements, and the plurality of switching elements can be alternately turned on to generate a square wave voltage.

The resonant circuit 20 is composed of a resonant capacitor, a resonant inductance, and a transformer 30, and can filter high-order harmonic currents. That is, the resonant circuit 20 can allow only a sine wave current to flow even when a square wave voltage is applied.

The resonant circuit 20 includes the transformer 30, which is a device that changes the value of AC voltage or current by using the electromagnetic induction phenomenon.

The rectifier circuit 40 includes a rectifier diode and a capacitor, and can rectify AC current to generate DC voltage through these. According to one embodiment, the rectifier circuit 40 may be an SR (Synchronous Rectifier) circuit, but this is only an example, and it is reasonable that it is not limited thereto.

The square wave generator 10 and the rectifier circuit 40 are only examples, and may be formed in a configuration other than the configuration illustrated in FIG. 1.

Meanwhile, when the load of the electronic device increases, the power capacity of the power supply devices increases, and accordingly, the size of the power supply devices may increase. Therefore, the present disclosure proposes a method for miniaturizing the transformer 30, which takes up a large volume in the power supply devices.

According to one embodiment, the present disclosure can provide a miniaturized transformer 30 by increasing the operating frequency of the LLC resonant converter 1.

Specifically, when the resonant frequency of the LLC resonant converter 1 increases, the peak current decreases, and accordingly, the magnetizing inductance (Lm) of the transformer 30 can decrease. Accordingly, the number of turns of the core and the primary, secondary coils can be reduced, and thus, the size of the transformer 30 can be reduced. For example, when the resonant frequency of the LLC resonant converter 1 increases from 100 kHz to 250 kHz, the magnetizing inductance (Lm) decreases from 210 uH to 100 uH, and accordingly, the primary coil can be reduced from 24 turns to 12 turns, and the secondary coil can be reduced from 2 turns to 1 turn, thereby reducing the size of the transformer 30.

Meanwhile, conventionally, a plurality of transformers were equipped in an LLC resonant converter 1. The present disclosure aims to reduce the size of the transformer 30 by implementing the plurality of transformers into a single transformer 30. For example, three transformers, each having an effective cross-sectional area (Ae) of 144, were used in the past, but this is intended to be implemented into a single transformer having an effective cross-sectional area of 450. However, in this case, the winding window area may be narrowed, which may cause a heat generation problem in the primary and secondary coils. In addition, when only the size of one existing core and one proposed core is compared, there is a concern that cracks or bending may occur because the core size increases. Therefore, the present disclosure aims to propose a method for increasing the winding window area while minimizing the increase in the volume of the core itself. According to one embodiment, the actual winding window area is intended to be increased while minimizing the increase in the volume of the core itself by removing a bobbin within the winding window area. Before explaining this, the structure of a conventional transformer is explained.

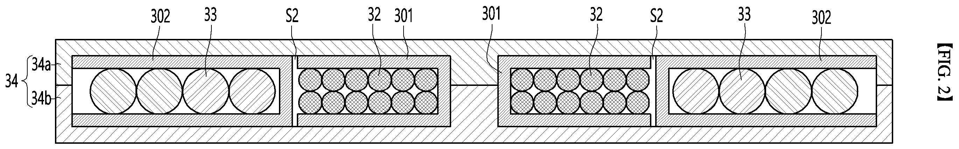

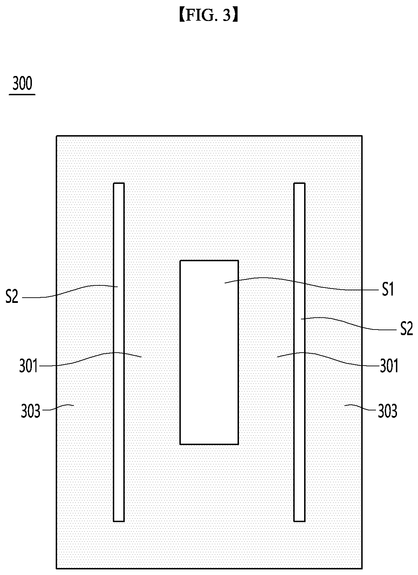

FIG. 2 is a cross-sectional view of a conventional transformer, and FIG. 3 is a drawing showing a bobbin of a conventional transformer.

A conventional transformer may include a bobbin 300, a primary coil 32 and a secondary coil 33 wound around the bobbin 300, and a core 34 assembled to the bobbin 300 around which the primary coil 32 and the secondary coil 33 are wound.

The core 34 may be formed of a ferrite material and may include an upper core member 34a and a lower core member 34b having an 'E' shape. The upper core member 34a and the lower core member 34b may be joined to the upper and lower sides of the bobbin 10, respectively.

At the center of the bobbin 300, a hollow portion S1 can be formed in which the upper core member 34a and the lower core member 34b are in close contact. At the periphery of the hollow portion S1, a first section bobbin 301 can be formed in which the primary coil 32 is wound, and a second section bobbin 303 can be formed in which the secondary coil 33 is wound with a gap S2 between the first section bobbin 301 and the second section bobbin 303.

As shown in the cross-sectional view of FIG. 2, the first section bobbin 301 can surround the inner side, upper side, and lower side of the primary coil 32 inside the core 34, and the second section bobbin 302 can surround the inner side, upper side, and lower side of the secondary coil 33. That is, according to the related art, since at least a part of the bobbin 300 occupies the winding window area of the core 34, there is a problem that the heat generation problem becomes severe, and there is a limitation that the size of the core 34 must be increased in order to increase the number of turns.

Therefore, the present disclosure provides a transformer in which the bobbin is removed from the winding window area of the core 34, thereby securing the winding window area to improve the heat generation problem, and increasing the thickness of the core 34 in the direction of the winding window area to increase the power capacity while maintaining the actual volume of the core 34.

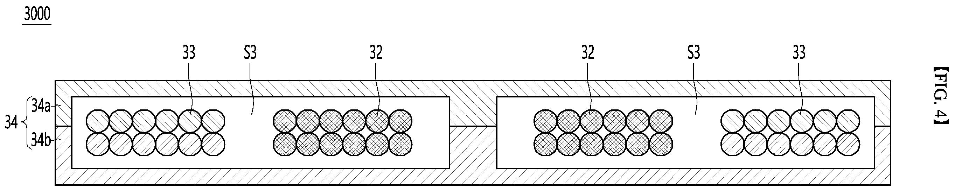

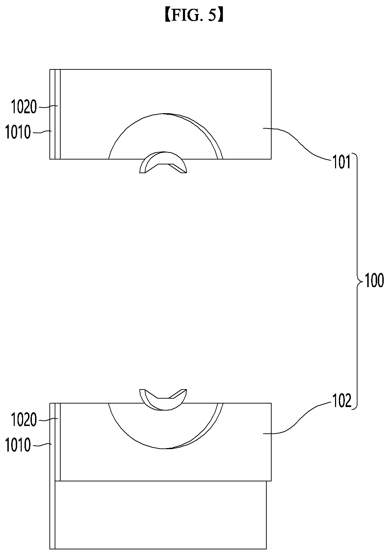

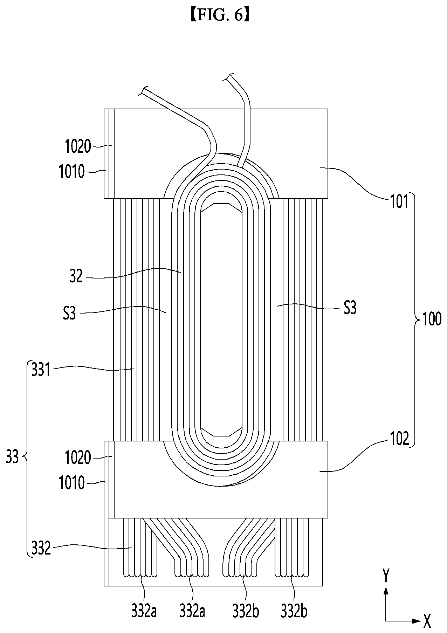

FIG. 4 is a cross-sectional view of a transformer according to an embodiment of the present disclosure, FIG. 5 is a drawing illustrating a bobbin of a transformer according to an embodiment of the present disclosure, and FIG. 6 is a drawing illustrating a primary coil and a secondary coil wound around the bobbin illustrated in FIG. 5.

A transformer 3000 according to an embodiment of the present disclosure may include a bobbin 100, a primary coil 32 wound around the bobbin 100, a secondary coil 33 wound around the bobbin 100, and a core 34.

The core 34 may include an upper core member 34a and a lower core member 34b coupled around the primary coil 32 and the secondary coil 33. That is, the upper core member 34a and the lower core member 34b may be assembled at the upper and lower sides of the primary coil 32 and the secondary coil 33, respectively. Only the primary coil 32 and the secondary coil 33 may be arranged between the upper core member 34a and the lower core member 34b.

The bobbin 100 may include a first bobbin member 101 and a second bobbin member 102 that guide the winding areas of the primary coil 32 and the secondary coil 33 outside the core 34. That is, the core 34 may be arranged between the first bobbin member 101 and the second bobbin member 102. The upper core member 34a and the lower core member 34b may be assembled between the first bobbin member 101 and the second bobbin member 102.

The first bobbin member 101 and the second bobbin member 102 can guide the areas where the primary coil 32 and the secondary coil 33 are wound, respectively. For example, the first bobbin member 101 and the second bobbin member 102 may each have a groove (not shown) or a partition (not shown) formed therein to guide the areas where the primary coil 32 is wound and the secondary coil 33 is wound, but this is merely an example and it is reasonable that the present invention is not limited thereto. That is, as described below, the first bobbin member 101 and the second bobbin member 102 may have a groove (not shown) or a partition (not shown) formed therein so that the primary coil 32 and the secondary coil 33 are arranged flatly or spaced apart from each other by a predetermined distance.

In particular, the first bobbin member 101 and the second bobbin member 102 can guide the primary coil 32 and the secondary coil 33, which are arranged on the inner side of the core 34, that is, between the upper core member 34a and the lower core member 34b, to be arranged flatly. Referring to FIG. 6, it can be confirmed that the primary coil 32 and the secondary coil 33 are arranged flatly in the y direction.

In addition, the first bobbin member 101 and the second bobbin member 102 can guide the area where the primary coil 32 and the secondary coil 33 are wound so that the primary coil 32 and the secondary coil 33 are arranged spaced apart by a predetermined distance or more. That is, when the primary coil 32 and the secondary coil 33 are wound along the groove (not shown) or the partition (not shown) formed in the first bobbin member 101 and the second bobbin member 102, the primary coil 32 and the secondary coil 33 can be arranged to be spaced apart by a predetermined distance or more. As shown in FIG. 4 and FIG. 6, a gap S3 can be formed between the primary coil 32 and the secondary coil 33.

In this way, according to the embodiment of the present disclosure, even without the section bobbin, the primary coil 32 and the secondary coil 33 are spaced apart by a predetermined distance or more, so that leakage inductance can be generated, and since the primary coil 32 and the secondary coil 33 are arranged flat, there is an advantage of minimizing the problem of the leakage inductance varying because the separation distance between the primary coil 32 and the secondary coil 33 is not fixed. That is, there is an advantage in that stable leakage inductance can be generated by guiding the primary coil 32 and secondary coil 33 to be arranged flatly with a predetermined distance between them by the first bobbin member 101 and the second bobbin member 102, which are arranged on the outside of the core 34.

Meanwhile, the first bobbin member 101 and the second bobbin member 102 may be formed with a structure in which the lower part 1010 and the upper part 1020 are joined, respectively, but this is only an example and therefore it is reasonable that it is not limited thereto.

The primary coil 32 is arranged flat between the first bobbin member 101 and the second bobbin member 102, and can be arranged in a curved manner on the first bobbin member 101 and the second bobbin member 102. The primary coil 32 is arranged flat between the upper core member 34a and the lower core member 34b, and can be arranged in a curved manner along a semicircle on the first bobbin member 101 and the second bobbin member 102.

The secondary coil 33 can be arranged flat between the first bobbin member 101 and the second bobbin member 102. The secondary coil 33 can be arranged flat between the upper core member 34a and the lower core member 34b. The portion of the secondary coil 33 that is arranged flat can be called a flat winding portion 331, but this name is only an example for the convenience of explanation, and therefore it is reasonable not to be limited thereto.

And, the secondary coil 33 arranged on the first bobbin member 101 may be arranged in a bent shape. For example, the secondary coil 33 may be arranged along a semicircular shape on the first bobbin member 101. The secondary coil 33 arranged on the first bobbin member 101 may be a bent portion (not shown) connecting the flat winding portions 331 that sandwich the primary coil 31.

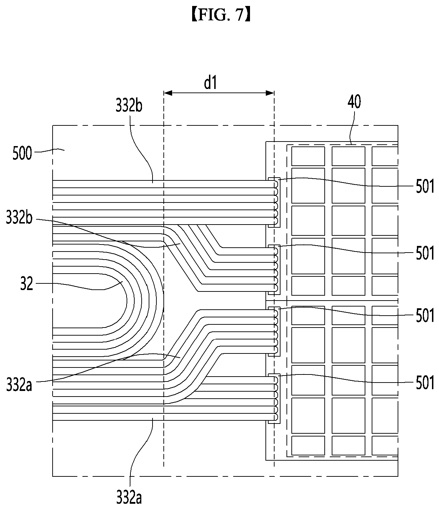

The secondary coil 33 arranged on the second bobbin member 102 may be a connecting portion 332 connected to a power board (500, see FIG. 7). That is, the connecting portion 332 may be extended from the flat winding portion 331 and dipped into the power board (500, see FIG. 7).

That is, the secondary coil 33 may include at least one of a flat winding portion 331 that is arranged flat, a bent portion (not shown) between the flat winding portions 331, and a connecting portion 332 that extends from the flat winding portion 331 and is connected to a power board (500, see FIG. 7).

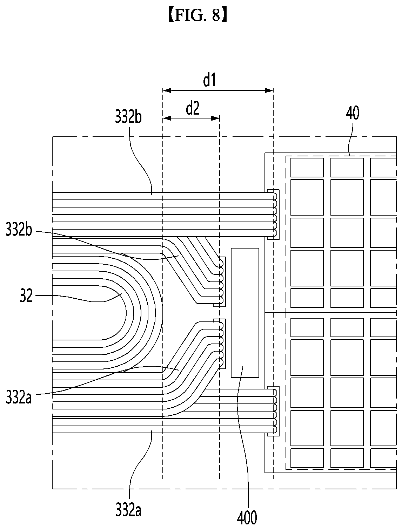

Next, referring to FIG. 7 and FIG. 8, a description will be given of how the secondary coil of the transformer according to an embodiment of the present disclosure is connected to a power board.

FIG. 7 is an exemplary drawing showing a state in which a secondary coil of a transformer according to the first embodiment of the present disclosure is connected to a power board, and FIG. 8 is an exemplary drawing showing a state in which a secondary coil of a transformer according to the second embodiment of the present disclosure is connected to a power board.

In FIGS. 7 and 8, the bobbin 100 is not illustrated for convenience of explanation, but this is only for convenience of explanation, and therefore it is reasonable that it is not limited thereto.

First, the connecting portion 332 of the secondary coil 33 may include a first connecting portion 332a and a second connecting portion 332b. Either the first connecting portion 332a or the second connecting portion 332b may be one end of the secondary coil 33, and the other may be the other end of the secondary coil 33. That is, the first connecting portion 332a may be one end of the secondary coil 33, and the second connecting portion 332b may be the other end of the secondary coil 33.

In the examples of FIGS. 7 and 8, the secondary coil 33 is formed as a 2-layer in which the upper and lower layers are respectively arranged, and the first connecting portion 332a and the second connecting portion 332b corresponding to the secondary coil 33 arranged in the upper layer, and the first connecting portion 332a and the second connecting portion 332b corresponding to the secondary coil 33 arranged in the lower layer are illustrated. That is, in the examples of FIGS. 7 and 8, the first connecting portion 332a and the second connecting portion 332b are illustrated in two each, but this is only an example, and therefore, it is reasonable that the present invention is not limited thereto.

The first connecting portion 332a and the second connecting portion 332b can be connected to the power board 500 by a method such as soldering. A dipping area 501 connected to the first connecting portion 332a and the second connecting portion 332b can be formed in the power board 500.

According to one embodiment, when dipping the first connecting portion 332a and the second connecting portion 332b into the power board 500, multiple strands may be dipped together. That is, in the past, each of the secondary coils 33 was soldered to a pin and connected to the PCB, but in this case, there was a disadvantage that an unsoldered portion occurred, causing a heat generation problem and increasing contact resistance. Accordingly, according to an embodiment of the present disclosure, the secondary coil 33 has a plurality of strands dipped directly into the PCB in the form of a flat winding, which has the advantage of minimizing the occurrence of non-soldered areas and minimizing contact resistance problems.

Meanwhile, at least one of the first connecting portion 332a and the second connecting portion 332b may be connected to the power board 500 so as to be adjacent to the rectifier circuit 40. The rectifier circuit 40 operates by sensing the voltage across the PCB pattern from the output of the transformer 3000. However, the PCB pattern may cause an inductance component, which may affect the sensing of the rectifier circuit 40 and cause unstable operation. Therefore, by arranging at least one of the first connecting portion 332a and the second connecting portion 332b adjacent to the rectifier circuit 40, the leakage inductance component due to the PCB pattern may be minimized, thereby improving the operational stability.

According to the first embodiment, as illustrated in FIG. 7, both the first connecting portion 332a and the second connecting portion 332b may be arranged adjacent to the rectifier circuit 40. That is, both the first connecting portion 332a and the second connecting portion 332b may be dipped into the power board 500 so that the distance between them and the rectifier circuit 40 is minimized.

According to the second embodiment, as illustrated in FIG. 8, only one of the first connecting portion 332a and the second connecting portion 332b can be arranged adjacent to the rectifier circuit 40. That is, the length of the first connecting portion 332a and the length of the second connecting portion 332b can be different. One of the first connecting portion 332a and the second connecting portion 332b can be connected closer to the rectifier circuit 40 than the other.

Specifically, when looking at the secondary coil 33 placed in the upper layer, it can be confirmed that the length d1 of the second connecting portion 332b is longer than the length d2 of the first connecting portion 332a. That is, in the case of the secondary coil 33 placed in the upper layer, it can be confirmed that the dipping area 501 where the second connecting portion 332b is connected to the power board 500 is closer to the rectifier circuit 40 than the dipping area 501 where the first connecting portion 332a is connected to the power board 500.

When looking at the secondary coil 33 placed in the lower layer, it can be confirmed that the length d1 of the first connecting portion 332a is longer than the length d2 of the second connecting portion 332b. That is, in the case of the secondary coil 33 arranged in the lower layer, it can be confirmed that the dipping area 501 where the first connecting portion 332a is connected to the power board 500 is closer to the rectifier circuit 40 than the dipping area 501 where the second connecting portion 332b is connected to the power board 500.

As described above, if only one of the first connecting portion 332a and the second connecting portion 332b is arranged close to the rectifier circuit 40, there is an advantage in that additional components can be added to the space between the other one and the rectifier circuit 40. Referring to the example of FIG. 8, if only one of the first connecting portion 332a and the second connecting portion 332b is arranged close to the rectifier circuit 40, the transformer 3000 can further include a heat dissipation portion 400 arranged between the other one and the rectifier circuit 40. This has the advantage of increasing the heat dissipation effect for the output of secondary coil 33.

The above description is merely an example of the technical idea of the present disclosure, and those with ordinary knowledge in the technical field to which the present disclosure belongs may make various modifications and variations without departing from the essential characteristics of the present disclosure.

Therefore, the embodiments disclosed in the present disclosure are not intended to limit the technical idea of the present disclosure but to explain it, and the scope of the technical idea of the present disclosure is not limited by these embodiments.

The protection scope of the present disclosure should be interpreted by the claims below, and all technical ideas within the equivalent scope should be interpreted as being included in the scope of the rights of the present disclosure.

## Claims

1. A transformer comprising:
a bobbin;
a primary coil wound on the bobbin;
a secondary coil wound on the bobbin; and
a core including an upper core member and a lower core member coupled around the primary coil and the secondary coil,
wherein the bobbin comprises a first bobbin member and a second bobbin member guiding winding areas of the primary coil and the secondary coil outside the core.

2. The transformer of claim 1, wherein the upper core member and the lower core member are assembled between the first bobbin member and the second bobbin member.

3. The transformer of claim 1, wherein the first bobbin member and the second bobbin member guide each of the primary coil and the secondary coil disposed between the upper core member and the lower core member to be placed flatly.

4. The transformer of claim 3, wherein the primary coil and the secondary coil are arranged at a predetermined distance apart from each other.

5. The transformer of claim 1, wherein the secondary coil comprises:
a flat winding portion arranged flatly, and
a connecting portion extended from the flat winding portion and dipped into a power board.

6. The transformer of claim 5, wherein the connecting portion includes at least a first connecting portion and a second connecting portion, and
a length of the first connecting portion and a length of the second connecting portion are different.

7. The transformer of claim 6, wherein one of the first connecting portion and the second connecting portion is connected closer to a rectifier circuit than the other connecting portion.

8. The transformer of claim 7, further comprising:
a heat dissipation portion disposed between the other connecting portion and the rectifier circuit.

9. The transformer of claim 1, wherein only the primary coil and the secondary coil are placed between the upper core member and the lower core member.

10. An LLC resonant converter, comprising:
a square wave generator;
a resonant circuit comprising a resonant capacitor, a resonant inductance, and a transformer; and
a rectifier circuit,
wherein the transformer comprises:
a bobbin,
a primary coil wound on the bobbin,
a secondary coil wound on the bobbin, and
a core including an upper core member and a lower core member coupled around the primary coil and the secondary coil,
wherein the bobbin comprises a first bobbin member and a second bobbin member guiding winding areas of the primary coil and the secondary coil outside the core.
